# EUROPEAN PATENT SPECIFICATION

(11) **EP 2 667 755 B1**
(45) Date of publication and mention of the grant of the patent: **01.07.2015**
(21) Application number: 12706315.4
(22) Date of filing: 24.01.2012
(51) Int. Cl.: F24C 15/20, A47J 27/09

(54) **OVER/UNDER-PRESSURE VALVE FOR A SOCKET ON A COOKING APPLIANCE, SOCKET AS WELL AS COOKING APPLIANCE**
ÜBER-/UNTERDRUCKVENTIL FÜR EINEN SOCKEL AUF EINER KOCHVORRICHTUNG, SOCKEL SOWIE KOCHVORRICHTUNG
CLAPET DE SURPRESSION/DÉPRESSION POUR UNE DOUILLE SUR UN APPAREIL DE CUISSON, DOUILLE AINSI QU'APPAREIL DE CUISSON

(30) Priority: 24.01.2011 DE 102011009294; 22.08.2011 DE 102011110784
(43) Date of publication of application: 04.12.2013
(73) Proprietor: Convotherm Elektrogeräte GmbH, 82436 Eglfing (DE)
(72) Inventor: LANG, Thomas, 82377 Penzberg (DE)
(74) Representative: Pallini Gervasi, Diego
(86) International application number: PCT/IB2012/000102
(87) International publication number: WO 2012/101503

(56) References cited:
- EP-A1- 1 543 754
- WO-A1-2006/001677
- CN-Y- 201 332 952
- CN-Y- 201 384 384
- KR-B1- 100 988 212

## Description

The invention relates to an over/underpressure valve for a socket on a cooking appliance, a socket with such a valve, as well as a cooking appliance with such a valve and/or with a socket. The invention more specifically focuses on commercial cooking appliances, in particular on commercial hot air steamers.

Many types of cooking appliances are known. In commercial use, hot air steamers are suitable for many cooking tasks. They have a steam generator, the steam of which circulates inside the cooking chamber in particular due to forced convection. Other energy sources can be additionally provided for cooking the food to be cooked.

A particularly advantageous embodiment of a hot air steamer operates with a water drain closed by a siphon.

More specifically in such an embodiment, at least one over/under-pressure valve should be provided on the cooking appliance. If an overpressure forms in the cooking chamber, it must be able to escape at any rate when it reaches a certain level. It is also necessary to compensate for or reduce an under-pressure at any rate when it exceeds a certain level, in order to prevent damage to the appliance or drain water to be sucked from the siphon into the cooking appliance. In a hot air steamer, a great under-pressure regularly occurs when excess humidity contained in the air circulating inside the cooking chamber is condensed by injecting cold water. With such a mixed condensation, the volume of the fogged area in the condenser abruptly decreases, so that ambient air must abruptly be sucked into the cooking appliance.

Providing such an over/under-pressure valve on a socket leading out of the casing of the cooking appliance is known. A disc rests outside on the socket with a circular cross-section. This disc closes the entire cross-section of the socket and protrudes slightly beyond it. A pin is centrally fastened to the disc - implemented by means of a star which extends inward from an edge area of the disc. The pin extends coaxially with the socket into it. It is located inside a guide sleeve which is disposed inside the socket - also via a star-shaped fastening. The pin is secured against being pulled out of the sleeve.

The disc has several clearances between its outer ring and the central area from which the pin extends. These clearances are completely covered by a smaller disc on the side facing the inside of the socket. The smaller disc is pre-tensioned against the greater disc by means of a spring, but can be withdrawn by several millimeters from the greater disc toward the inside of the socket until it reaches a limit, if a force is applied to it.

During operation of a cooking appliance equipped with this, the over/under-pressure valve hermetically seals the socket under normal pressure conditions: the greater disc closes the tubular end of the socket and the smaller disc covers the clearances of the greater disc.

If an excess overpressure builds up, the greater disc lifts off the tubular end of the socket in an axially outward direction. It is supported in this by the small disc because due to the higher pressure, it presses even more strongly from the inside against the clearances on the greater disc.

The air can escape substantially radially through the vent between the tubular end of the socket and the outer disc.

A collar is usually disposed around this circular outlet, mostly a pipe section with a greater diameter. The collar diverts the air back into an axial direction and lets it exit the appliance. This prevents the escaping air that has been deviated in an orthogonal direction relative to the vertical axial direction from escaping for instance in the direction of the operating personnel. They may indeed well stand approximately at face level with the upper edge of the casing of the cooking appliance.

Once the overpressure has been dissipated, gravity pulls both discs which are pre-tensioned against each other back down until the greater disc comes to rest on the socket.

If however an excess under-pressure occurs inside the cooking appliance, the greater disc is firmly sucked onto the socket and thus remains stationary. Due to the under-pressure, the small disc however lifts off the greater disc toward the inside of the socket. Air can thus stream in through the apertures in the greater disc, through the vent between the greater disc and the smaller disc and through the annular gap around the smaller disc.

Once the under-pressure has been dissipated, the pre-tensioning spring pushes the small disc back against the greater disc.

WO 2006/001677 A1 discloses a pressure cooking vessel for making instant pickles. While it is well known for a rapid pickling and fermentation of vegetables to use a pressurized cooking method with many large storage tanks on a commercial basis, the document proposes a small and light pressure cooking vessel as a home appliance, with a compression check valve, arid with a decompression check valve, both located on the lid of the vessel. The compression check valve and the decompression check valve are located in respective gas pipes.

EP 1 543 754 A1 discloses a heating cooker, which prevents leakage of water even when an inlet of water feed pipe is placed in any direction in the heating cooker, and in which a water feed tank is removeably coupled to the water feed pipe in any direction. A first valve and a second valve are provided to control an outlet provided on the water feed tank to discharge the water from the water feed tank; and respectively to control an inlet provided on the water feed pipe to draw the water discharge from the water feed tank into the water feed pipe.

CN 201332952 Y discloses openings which are suitable for letting water or air pass through. Within in the aperture, there is provided a circular-shaped center solid part, and three connection links.

KR 10-0988212 discloses a valve for a cooking vessel, situated in the lid of the vessel. The valve is located in a guiding element. The guiding element can slide outward out of the surface of the lid when an overpressure condition is found in the interior of the vessel. After the overpressure air has been released, the element can slide back into the interior of the lid.

CN 201384384 Y shows a fluid valve in which a center part is turnable against an outer part.

The object underlying the invention is to provide an improve valve.

According to a first aspect of the present invention, the object is solved by an over/under-pressure valve for a socket on a cooking appliance, more specifically on a commercial hot air steamer, with an opener opening outward for discharging overpressure and with an opener opening inward for discharging under-pressure, one of the two openers being mounted on the socket and the opener mounted on the socket having an edge guide opposing the socket.

The following terms must be explained:

"Opening inward" refers to a direction of motion of one of the openers toward the inside of the socket, meaning ultimately with a socket mounted onto the cooking appliance, a direction of motion which yields to an air flow into the cooking appliance.

Similarly, "opening outward" refers to a direction of opening which lets an air flow escape the cooking appliance through the socket.

It must be assumed, that, as a rule, the "socket" constitutes a closure of the pipes leading out of the cooking appliance. In practice, it must be born in mind that a pipe or tube system inside the casing extends from the cooking chamber to be discharged or the air piping system to the wall of the casing. The "socket" is preferably set in the casing wall, mostly on an upper side of the casing.

Such a configuration however is not mandatory. In fact, the entire "socket" can also be accommodated inside the casing of the appliance, or it can be located outside the casing.

It is also possible to imagine constellations with several over/under-pressure valves, these constellations having different types and places of installation.

Regarding "discharge", it must more specifically be born in mind to allow an overpressure or an under-pressure in the cooking chamber up to a certain limit, the over/under-pressure valve being activated for discharge only after this limit has been crossed.

It is essential for the "socket" to have a closable pipe system, more specifically pipes with a round cross-section.

Regarding the mounting on the socket, it must be understood that at least one of the two openers should be guided by means of a firmly attached mounting. This mounting can be fastened on the socket if the socket as such constitutes a constructional element with the built-in over/under-pressure valve. The same effect occurs of course if the mounting is not attached to the socket but for instance directly to the casing of the cooking appliance.

At any rate, one of the two openers can be mounted to the other one. It makes sense for constructional reasons if a smaller opener is mounted on a bigger opener.

In order to simplify readability, expressions using "at least" will be avoided as much as possible in the present application. A feature with an indefinite article "one", "two", etc. must thus always be understood as though it included the expression "at least", provided it does not result from the context that precisely such a number should be available.

An "edge guide" must be understood as a guide, which takes over the task of guiding the opener along the edge of the opener and/or the socket. It should therefore be moved away from the axial guide in the middle. The latter indeed has the disadvantage that for a centrally disposed guided element on the opener, a guide must be centrally disposed in the socket. To that end it is necessary to encroach on the path of the air flow which increases the flow resistance and furthermore requires a rather high construction expense.

In contrast, both the socket and the opener already feature an edge. It is thus considerably easier in terms of construction to directly use at least one of the two edges which are already available for guiding.

A reliable guide becomes particularly important more specifically when the displaced edge-guided opener must return merely by means of gravity.

An edge guide already exists when the guide is only disposed at one point or a portion of the edge.

It is preferable however to use the entire edge as a guide.

It is preferable if the opener mounted on the socket carries the other opener in a spring-mounted manner. A guide can also be provided at the edge or even preferably in a central area for the spring-mounted connection.

It is proposed that both openers are connected to each other via a pin and a sleeve. Such a design can have a small configuration, a spring being easily integrated.

The openers themselves can be manufactured in many different designs. Discs or cups provide particularly simple designs. Metal is suitable as a construction material but other construction materials more specifically such as plastic material can also be used.

The surface which actually closes the socket is preferably positioned orthogonally to a direction of flow through the socket. It is preferably disc-shaped.

The edge guide can have extensive clearances.

A "clearance" on the edge guide must more specifically be understood as an arrangement in which the edge guide exists at least on a constructional element, otherwise as a collar-type area, for instance as a cylinder barrel.

The extensive clearances are supposed to be present in the edge guide. They make it easier for the air to escape. This design particularly makes sense when the edge guide must serve for displacement, more specifically lifting, in the function of the overpressure valve. The excess pressure then pushes the corresponding opener along its preferably linear edge guide mainly upwards out of the socket. The collar-shaped edge guide firmly connected to the opener, for instance a plane cover, is accordingly lifted at least partially out of the socket. In order for the air to escape more easily, the clearances are provided in the collar. The air can then escape not only through the vent between the collar and the socket but additionally in a radial or diagonal direction through the clearances out of the inside of the collar and over the edge of the socket into the ambient air.

In order to facilitate the escape or inflow of air, it is proposed that the cut surface of the edge guide is greater than its remaining surface.

In an extreme development, the edge guide consists only of a few guide bars. Broader, disc-shaped bars are also possible.

In general, it would have to be possible to assume that a greater surface of the edge guide supports a secure gliding of the opener in both directions and reduces the risk of it getting jammed.

The inventor considers configuring the edge guide as a toothed ring as a good compromise between openness and available guiding surface at the edge guide. The multiple teeth run respectively parallel to the outline of the socket, that is for instance in the shape of a circular ring segment. A sufficient space remains however between the teeth for the air to flow through.

The toothed ring can for instance have a wave-shaped outline.

The edge guide has a longitudinal extension in relation to the outlet direction of the opener, which in the simplest case is linear and coaxial to the socket. The toothed ring should have an extension of at least 1 cm, or preferably 2 cm in the axial direction. With a sufficient extension, the opener can distinctly lift off its closed position when it opens.

It should furthermore be born in mind that when the socket is installed on the cooking appliance, it can have a collar in form of a beveled pipe section which continues like a chimney.

The socket and the valve are preferably matched in such a manner that the chimney-type collar on the socket is higher than a lift of the opener opening outward, but that the measure of the projection is as small as possible, so that in its opened position, the opener opening outward preferably rises to less than 5 mm from a lowest point of the chimney-type collar.

In order to be able to securely maintain the open position, the opener opening outward can be secured to the socket by means of an anchor. In a simple case, such an anchor can be a chain or a bar which moves together with the opener opening outward during its opening motion, a bolt, which is for instance firmly connected to the socket or can be disposed in it so that it can move up to a certain limit, being provided at the bottom of the chain or bar.

It is understood that a socket as described above, more specifically equipped with an over/under-pressure valve is advantageous.

The same applies to a cooking appliance which is equipped with such a valve and/or socket.

An exemplary embodiment of the invention is described in more detail in the following with reference to the drawings. In the drawings:
- Figure 1: shows a front view of a vertical socket for a cooking appliance with a built-in over/under-pressure valve,
- Figure 2: shows a section through the socket and the over/under-pressure valve from figure 1 according to the markings II - II in figure 1,

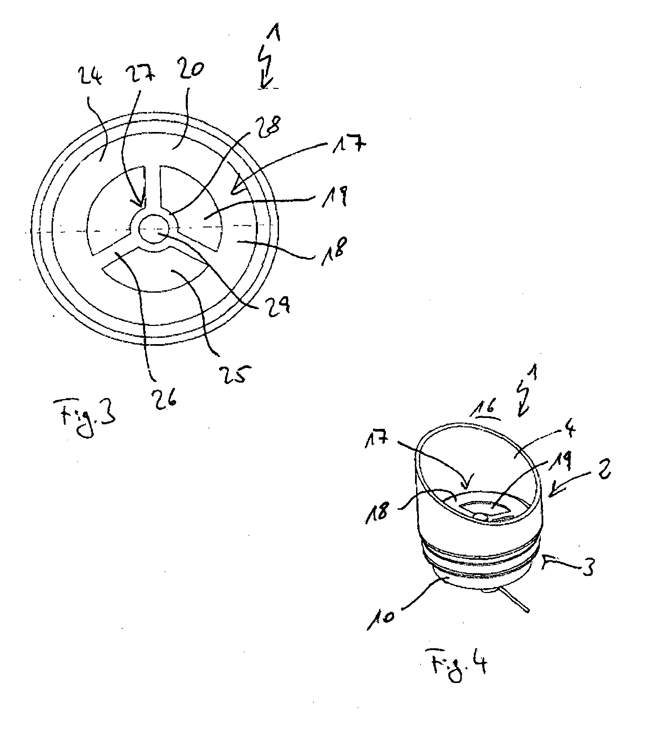

- Figure 3: shows a top view onto the socket with the over/under-pressure valve from figures 1 and 2 according to the markings III - III in figure 2, and
- Figure 4: shows a three-dimensional view of the socket with over/under-pressure valve from figures 1 to 3.

The socket 1 in the figures is provided for being inserted into a casing of a cooking appliance. There an outer part 2 of it should protrude vertically upward out of the casing of the cooking appliance, while an inner part 3 should be disposed inside the cooking appliance usually made of sheet metal.

The outer part 2 substantially consists of a cylindrical collar 4, which is disposed coaxially to an axial direction 5 of the socket. An upper side 6 of the collar 4 is beveled, thus resulting in a higher area 7 and a lower area 8 of the collar 4.

The collar 4 is hollow inside. It consists only of a sheet metal which forms the cylinder barrel. The latter is closely connected to a bottom sheet metal plate 9.

The inner part 3 of the socket 1 has a considerably more complex configuration:

It substantially consists of a pipe socket 10 through which air can flow in different directions in case of an over or under-pressure. An O-ring 13 made of a silicone for instance is disposed outside the pipe socket 10 in an axial fixation by means of two flanges 11, 12.

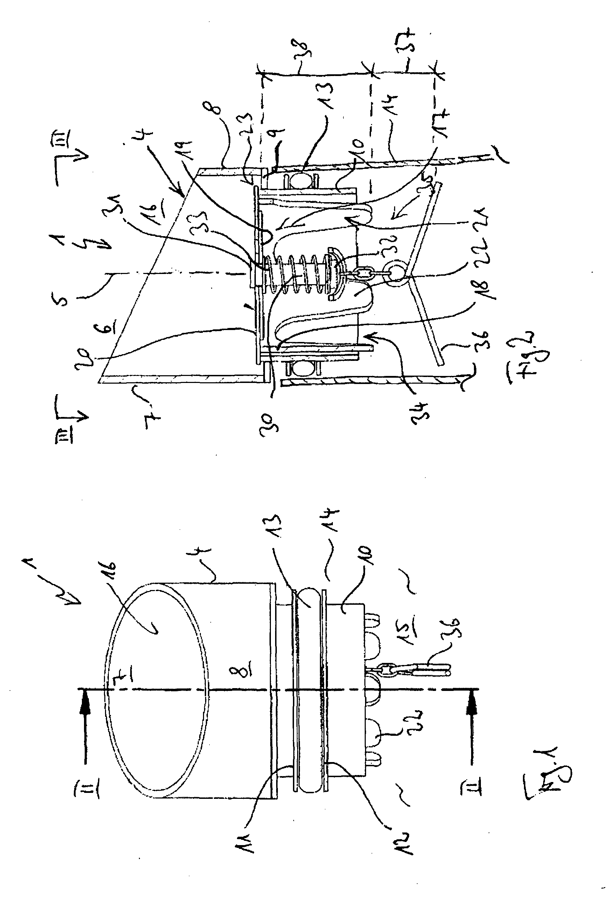

While the bottom plate 9 is destined to be fit directly on a pipe 14 of a cooking appliance (not shown), the inner part 3 is substantially destined to be inserted into the pipe 14 (only shown in figure 1), the O-ring 13 providing for a hermetical seal.

From an axial perspective, the over/under-pressure valve 17 lies between an inner area 15 of the pipe 14 - and thus of the cooking appliance - and an outer area 16 with ambient air.

The over/under-pressure valve 17 substantially consists of a cup-shaped first opener 18 and a disc-shaped second opener 19 in the form of a valve disc.

The cup-shaped first opener 18 is composed of a big disc 20 and a toothed ring 21 with teeth 22 (exemplarily labeled) attached to it.

The big disc 20 has a circular outer outline which slightly protrudes from the pipe socket 10 due to its dimensions, so that it rests tightly on the pipe socket 10 in a ring-shaped contact point 23. It is however not firmly attached there, but rather freely movable.

The big disc 20 has a continuous ring-shaped edge area 24 with three extensive apertures 25 (exemplarily labeled). Three radial bars 26 (exemplarily labeled) are arranged in shape of a star between the three apertures 25 and converge into a small ring 28 in a center 27 through which a central axis also runs. This ring has an orifice 29 in its center for a screw or a pin 30.

The pin 30 is secured against sliding through the small ring 28 into the inner area 15 by means of a first front flange 31. On its other side, it has a second front flange 32. A spiral spring 33 is mounted there. The spiral spring 33 extends from the second front flange 32 disposed inward, in the direction of the outer area and is pre-tensioned there against the disc-shaped second opener 19. The disc-shaped second opener 19 is therefore maintained by the pre-tension of the spiral spring 33 against the extensive apertures 25 of the big disc 20 of the cup-shaped first opener 18 and closes them.

The teeth 22 of the toothed ring 21 have the same pronounced wave-shaped run in which the surface equipped with teeth 22 is approximately the same as the surface equipped with clearances 34 (exemplarily labeled). The radial diameter of the toothed ring 21 is marginally smaller than the pipe socket 10, so that the cup-shaped first opener 18 can only deviate inside the pipe socket 10 by a very small angle relative to the axial direction 5, even when the cup-shaped first opener 18 only extends into the pipe socket 10 with a small section of the toothed ring 21.

An anchor-shaped element in form of a wire is attached to a chain at a lower end 35 of the pin 30.

It is suspended at equilibrium, so that two limbs protrude radially the same distance. In their radial extension in relation to the axial direction 5 and thus to the central axis of the socket 1, the two limbs extend beyond the pipe socket 10 but are smaller than the pipe 14 coming from the cooking appliance.

During operation of the cooking appliance and thus of the socket 1 with its over/under-pressure valve 17, the clamping of the O-ring 13 at first provides a secure sealing of the inside of the cooking appliance, particularly of the cooking chamber, with which the inner area 15 is connected, against the outer area 16. Air cannot enter respectively escape next to the O-ring 13, nor through the pipe socket 10, since the pipe socket 10 is closed radially inward by the cup-shaped first opener 18, in practice by its big disc 20, and by the disc-shaped second opener 19.

Gravity seals the over/under-pressure valve 17 against overpressure in the inner area 15 by means of the cup-shaped first opener 18, the disc-shaped second opener 19, the spiral spring 33 and the anchor-shaped element 36 as well as the connecting chain.

If the upward force resulting from an overpressure in the inner area 15 is greater than this weight, the unit listed above, substantially the entire over/under-pressure valve 17, lifts off from the contact point 23 of the pipe socket 10 toward the outer area 16. The toothed ring 21 lifts out of the pipe socket 10 to the same degree. The air can escape diagonally upward through the very extensive clearances 34 into the collar 4 of the outer part 2 of the socket 1 and out.

Once the discharge of the overpressure has occurred, gravity leads the over/under-pressure valve 17 back to a neutral position shown in the figures.

When leaving the pipe socket 10, the over/under-pressure valve 17 is guided linearly along its toothed ring 21. Since the toothed ring 21 is mechanically engaged with the pipe socket 10, in order to prevent a jam at a very short angle, and since the toothed ring 21 is located at the ring-shaped edge area 24 of the big disc 20, the toothed ring 21 interacting with the pipe socket 10 serves as an edge guide in the present invention.

Losing the over/under-pressure valve 17 when it lifts out of the pipe socket 10, which in turn is attached locally to the pipe 14 by clamping, is prevented by the anchor-shaped element 36. An axial leeway 37 between the anchor-shaped element 36 and its necessarily occurring impact on the pipe socket 10 is smaller by a few millimeters than an axial length 38 of the teeth 22. When the over/under-pressure valve 17 leaves the pipe socket and the anchor-shaped element 36 hits against the pipe socket 10 from below, a few millimeters of the teeth 22 and thus of the axial edge guide are thus still inside the pipe socket 10. This ensures that the over/under-pressure valve 17 falls safely back into the pipe socket 10 when the overpressure decreases.

In case of an under-pressure, the over/under-pressure valve 17 is shut tight until the force resulting from the under-pressure in the inner area 15 onto the disc-shaped second opener 19 exceeds the pre-tensioning force of the spiral spring 33. When this happens, the disc-shaped second opener 19 lowers toward the inner area 15 against the force of the spiral spring 33. Air can then enter from the outer area 16 into the inner area 15 through the apertures 25.

Once the under-pressure has been relieved, the spiral spring 33 reliably closes the disc-shaped second opener 19 against the cup-shaped first opener 18.

**List of reference numbers**

| | | | |
|---|---|---|---|
| 1 | Socket | 20 | Big disc |
| 2 | Outer part | 21 | Toothed ring |
| 3 | Inner part | 22 | Tooth |
| 4 | Collar | 23 | Contact point |
| 5 | Axial direction | 24 | Ring-shaped edge area |
| 6 | Upper side | 25 | Aperture |
| 7 | High area | 26 | Bar |
| 8 | Lower area | 27 | Center |
| 9 | Bottom plate | 28 | Small ring |
| 10 | Pipe socket | 29 | Orifice |
| 11 | Flange | 30 | Pin |
| 12 | Flange | 31 | First front flange |
| 13 | O-ring | 32 | Second front flange |
| 14 | Pipe | 33 | Spiral spring |
| 15 | Inner area | 34 | Clearance |
| 16 | Outer area | 35 | Bottom end |
| 17 | Over/under-pressure valve | 36 | Anchor-shaped element |
| 18 | Cup-shaped first opener | 37 | Axial leeway |
| 19 | Disc-shaped second opener | 38 | Axial length |

## Claims

1. An over/under-pressure valve for a socket on a cooking appliance, more specifically on a commercial hot air steamer, with an opener opening outward for reducing an overpressure and with an opener opening inward for reducing an under-pressure, one of the two openers being mounted on the socket, ***characterized in that*** the opener mounted on the socket has an edge guide comprised of a longitudinal extension disposed inward relative to the opener mounted on the socket.

2. The valve according to claim 1, ***characterized in that*** the opener mounted on the socket carries the other opener in a spring-mounted manner.

3. The valve according to one of the claims 1 or 2, ***characterized in that*** the edge guide has extensive clearances.

4. The valve according to claim 3, ***characterized in that*** the edge guide has more cut surface than remaining surface.

5. The valve according to claim 3 or 4, ***characterized in that*** the edge guide is configured as a toothed ring.

6. The valve according to claim 5, ***characterized in that*** the toothed ring has a wave-shaped outline.

7. The valve according to one of the afore-mentioned claims, ***characterized in that*** the longitudinal extension is of at least 1 cm, preferably at least 2 cm.

8. The valve according to one of the afore-mentioned claims, ***characterized in that*** the edge guide is configured axially and the valve preferably has an anchor for the socket.

9. The valve according to one of the afore-mentioned claims, ***characterized in that*** in its closed state, the opener opening outward counteracts the overpressure via the spring load or its own weight.

10. The valve according to one of the afore-mentioned claims, ***characterized in that*** in its closed state, the opener opening inward counteracts the under-pressure via the spring load.

11. A socket with a valve according to one of the afore-mentioned claims, a collar which is higher than a lift of the opener opening outward extending preferably in a longitudinal direction.

12. The socket according to claim 11, ***characterized in that*** during re duction of the overpressure, the air escapes through radial clearances and is preferably subsequently conducted axially in a collar.

13. The socket according to claim 11 or 12, ***characterized in that*** during reduction of the under-pressure, the air flows in through apertures in an axial direction.

14. A cooking appliance with a socket according to one of the claims 11 to 13.

## Patentansprüche

1. Über-/Unterdruckventil für einen Stutzen auf einer Kochvorrichtung, genauer gesagt auf einem gewerblichen Dampfgarer, mit einem sich nach außen öffnenden Öffner zur Verringerung eines Überdrucks und mit einem sich nach innen öffnenden Öffner zur Verringerung eines Unterdrucks, wobei einer der beiden Öffner an dem Stutzen montiert ist, ***dadurch gekennzeichnet, dass*** der an dem Stutzen montierte Öffner eine Kantenführung hat, die aus einer Längserweiterung besteht, die in Bezug zu dem an dem Stutzen montierten Öffner einwärts angeordnet ist.

2. Ventil nach Anspruch 1, ***dadurch gekennzeichnet, dass*** der an dem Stutzen montierte Öffner den anderen Öffner in einer federnd gelagerten Weise trägt.

3. Ventil nach einem der Ansprüche 1 oder 2, ***dadurch gekennzeichnet, dass*** die Kantenführung umfangreiche Leerräume hat.

4. Ventil nach Anspruch 3, ***dadurch gekennzeichnet, dass*** die Kantenführung mehr ausgeschnittene Fläche als Restfläche besitzt.

5. Ventil nach Anspruch 3 oder 4, ***dadurch gekennzeichnet, dass*** die Kantenführung als ein Zahnring gestaltet ist.

6. Ventil nach Anspruch 5, ***dadurch gekennzeichnet, dass*** der Zahnring eine wellenförmige Außenkontur hat.

7. Ventil nach einem der vorherigen Ansprüche, ***dadurch gekennzeichnet, dass*** die Längserweiterung mindestens 1 cm, vorzugsweise mindestens 2 cm misst.

8. Ventil nach einem der vorherigen Ansprüche, ***dadurch gekennzeichnet, dass*** die Kantenführung axial gestaltet ist und das Ventil vorzugsweise einen Anker für den Stutzen hat.

9. Ventil nach einem der vorherigen Ansprüche, ***dadurch gekennzeichnet, dass*** in seinem geschlossenen Zustand der sich nach außen öffnende Öffner dem Überdruck über die Federkraft oder sein Eigengewicht entgegenwirkt.

10. Ventil nach einem der vorherigen Ansprüche, ***dadurch gekennzeichnet, dass*** in seinem geschlossenen Zustand der sich nach innen öffnende Öffner dem Unterdruck über die Federkraft entgegenwirkt.

11. Stutzen mit einem Ventil nach einem der vorherigen Ansprüche, einem Kragen, welcher höher ist als eine Hebung des sich nach außen öffnenden Öffners, der vorzugsweise in einer Längsrichtung verläuft.

12. Stutzen nach Anspruch 11, ***dadurch gekennzeichnet, dass*** während der Verringerung des Überdrucks die Luft durch radiale Leerräume ausströmt und vorzugsweise anschließend axial in einen Kragen geleitet wird.

13. Stutzen nach Anspruch 11 oder 12, ***dadurch gekennzeichnet, dass*** während der Verringerung des Unterdrucks die Luft durch Öffnungen in einer axialen Richtung strömt.

14. Kochvorrichtung mit einem Stutzen nach einem der Ansprüche 11 bis 13.

## Revendications

1. Clapet de surpression/dépression pour une douille sur un appareil de cuisson, plus particulièrement sur un étuveur à air chaud commercial, avec un dispositif d'ouverture qui s'ouvre vers l'extérieur pour réduire une surpression et avec un dispositif d'ouverture qui s'ouvre vers l'intérieur pour réduire une dépression, un des deux dispositifs d'ouverture étant monté sur la douille, ***caractérisé en ce que*** le dispositif d'ouverture monté sur la douille possède un guide de bord constitué d'une extension longitudinale placée vers l'intérieur par rapport au dispositif d'ouverture monté sur la douille.

2. Clapet selon la revendication 1, ***caractérisé en ce que*** le dispositif d'ouverture monté sur la douille porte l'autre dispositif d'ouverture d'une manière montée sur ressort.

3. Clapet selon l'une des revendications 1 ou 2, ***caractérisé en ce que*** le guide de bord présente d'importants dégagements.

4. Clapet selon la revendication 3, ***caractérisé en ce que*** le guide de bord possède une surface de coupe supérieure à la surface restante.

5. Clapet selon l'une des revendications 3 ou 4, ***caractérisé en ce que*** le guide de bord est conçu comme un anneau denté.

6. Clapet selon la revendication 5, ***caractérisé en ce que*** l'anneau denté possède un profil en forme d'onde.

7. Clapet selon l'une des revendications précédentes, ***caractérisé en ce que*** l'extension longitudinale est d'au moins 1 cm, de préférence d'au moins 2 cm.

8. Clapet selon l'une des revendications précédentes, ***caractérisé en ce que*** le guide de bord est conçu axialement et **en ce que** le clapet possède de préférence un ancrage pour la douille.

9. Clapet selon l'une des revendications précédentes, ***caractérisé en ce que**,* dans son état fermé, le dispositif d'ouverture qui s'ouvre vers l'extérieur neutralise la surpression à l'aide d'une charge de ressort ou de son propre poids.

10. Clapet selon l'une des revendications précédentes, ***caractérisé en ce que**,* dans son état fermé, le dispositif d'ouverture qui s'ouvre vers l'intérieur neutralise la dépression à l'aide d'une charge de ressort.

11. Douille avec un clapet selon l'une des revendications précédentes, une collerette qui est plus élevée qu'une levée du dispositif d'ouverture qui s'ouvre vers l'extérieur et qui s'étend de préférence dans une direction longitudinale.

12. Douille selon la revendication 11, ***caractérisée en ce que**,* pendant la réduction de la surpression, l'air s'échappe par des dégagements radiaux et est de préférence par la suite mené axialement dans une collerette.

13. Douille selon la revendication 11 ou 12, ***caractérisée en ce que**,* pendant la réduction de la dépression, l'air s'écoule dans les ouvertures traversantes dans une direction axiale.

14. Appareil de cuisson avec une douille selon l'une des revendications 11 à 13.
